(19) Europäisches Patentamt
European Patent Office
Office européen des brevets

(11) **EP 4 518 264 A1**

(12) **EUROPEAN PATENT APPLICATION**
published in accordance with Art. 153(4) EPC

(43) Date of publication:
**05.03.2025 Bulletin 2025/10**

(21) Application number: **23795296.5**

(22) Date of filing: **23.04.2023**

(51) International Patent Classification (IPC):
**H04L 27/26** (2006.01)

(52) Cooperative Patent Classification (CPC):
**H04L 5/00; H04L 27/26; H04W 64/00**

(86) International application number:
**PCT/CN2023/090138**

(87) International publication number:
**WO 2023/207863 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.04.2022 CN 202210476208**

(71) Applicant: **Datang Mobile Communications
Equipment Co., Ltd.
Beijing 100085 (CN)**

(72) Inventors:
• **REN, Xiaotao**
  **Beijing 100085 (CN)**
• **DA, Ren**
  **Beijing 100085 (CN)**
• **REN, Bin**
  **Beijing 100085 (CN)**

(74) Representative: **Studio Torta S.p.A.**
  **Via Viotti, 9**
  **10121 Torino (IT)**

(54) **METHOD AND APPARATUS FOR SENDING SIDELINK POSITIONING REFERENCE SIGNAL, AND TERMINAL POSITIONING METHOD AND APPARATUS**

(57) Provided are a method and apparatus for sending a sidelink positioning reference signal, and a terminal positioning method and apparatus. The method for sending a sidelink positioning reference signal comprises: generating a first sequence, and acquiring a sidelink positioning reference signal (S-PRS) according to the first sequence; and sending the S-PRS.

FIG. 1

EP 4 518 264 A1

**Description**

## CROSS-REFERENCE TO RELATED APPLICATION

This application claims priority to and benefits of Chinese Patent Application No. 2022104762085, filed on April 29, 2022, the entire content of which is incorporated herein by reference.

## TECHNICAL FIELD

The disclosure relates to the field of communication technology, and more particularly, to a method for transmitting a sidelink positioning reference signal, a terminal positioning method and a device.

## BACKGROUND

With the development of the 5th Generation Mobile Communication Technology (5G), the related New Radio (NR) positioning technology can define downlink positioning reference signals and uplink positioning reference signals through an air interface between a base station and a terminal, to realize positioning of the terminal.

In the related art, a sidelink positioning reference signal (S-PRS) between terminals can be introduced, so that the terminal can perform positioning without relying on the base station.

However, the sequences used in S-PRS transmission in the related art have the possibility of collision, resulting in serious S-PRS mutual interference between terminals, which in turn affects the accuracy of terminal positioning to a certain extent.

## SUMMARY

The disclosure aims to solve one of the technical problems in the related art, at least to a certain extent.

For this end, a purpose of the disclosure is to propose a method for transmitting a sidelink positioning reference signal, a terminal positioning method and a device, so as to eliminate interference between sequences used in different sidelink positioning reference signal (S-PRS) transmissions, avoid mutual interference between S-PRSs, optimize transmission and application methods of the S-PRS, and improve a terminal positioning accuracy in a scenario of S-PRS-based terminal positioning.

Embodiments of a first aspect of the disclosure provide a method for transmitting a sidelink positioning reference signal, performed by a first terminal. The method includes: generating a first sequence, and obtaining a sidelink positioning reference signal (S-PRS) according to the first sequence; and transmitting the S-PRS.

With the method for transmitting a sidelink positioning reference signal provided in the embodiments of the first aspect of the disclosure, after generating the first sequence, the corresponding S-PRS is obtained according to the first sequence, and the S-PRS is transmitted to a corresponding second terminal. In embodiments of the present disclosure, the first terminal can obtain different S-PRSs by generating different first sequences, thus avoiding mutual interference between S-PRSs transmitted in a multi-terminal scenario, reducing a probability of collision between S-PRSs, optimizing the transmission and application methods of the S-PRS, and improving the terminal positioning accuracy in the scenario of S-PRS-based terminal positioning.

Embodiments of a second aspect of the disclosure provide a terminal positioning method, performed by a second terminal. The method includes: receiving a sidelink positioning reference signal (S-PRS) transmitted by a first terminal, in which the S-PRS includes a first sequence; and determining a positioning measurement result according to the S-PRS, and transmitting the positioning measurement result to the first terminal or a positioning server.

With the terminal positioning method provided in the embodiments of the second aspect of the disclosure, the second terminal performs calculation on the first sequence carried in the received S-PRS transmitted by the first terminal, obtains the corresponding positioning measurement data, and transmits it to the first terminal or the positioning server, relevant calculating-solving unit on the first terminal or the positioning server perform calculation and resolution to determine location information of the first terminal. In embodiments of the present disclosure, the second terminal performs calculation on the first sequence in the S-PRS to obtain a corresponding calculation result, and the first terminal or the positioning server performs calculation and resolution on the calculation result to determine the location information of the first terminal, realizing terminal positioning in a scenario that does not rely on a base station. Different S-PRSs carry different first sequences, which reduces the degree of interference between S-PRSs, improves the positioning accuracy of the first terminal, and optimizes the terminal positioning method.

Embodiments of a third aspect of the disclosure provide an apparatus for transmitting a sidelink positioning reference signal, applied in a first terminal. The apparatus includes: a generation module, configured to generate a first sequence, and obtain a sidelink positioning reference signal (S-PRS) according to the first sequence; and a transmitting module, configured to transmit the S-PRS.

With the apparatus for transmitting a sidelink positioning reference signal provided in the embodiments of the third aspect of the disclosure, after generating the first sequence, the corresponding S-PRS is obtained according to the first sequence, and the S-PRS is transmitted to a corresponding second terminal. In embodiments of the present disclosure, the first terminal can obtain different S-PRSs by generating different first sequences, thus avoiding mutual interference between S-PRSs transmitted in a multi-terminal scenario, reducing a probability of collision between S-PRSs, optimizing the transmission and application methods of the S-PRS, and improving the terminal positioning accuracy in the scenario of S-PRS-based terminal positioning.

Embodiments of a fourth aspect of the disclosure provide a terminal positioning apparatus, applied to a second terminal. The apparatus includes: a receiving module, configured to receive a sidelink positioning reference signal (S-PRS) transmitted by a first terminal, in which the S-PRS includes a first sequence; and a determining module, configured to determine a positioning measurement result according to the S-PRS, and transmit the positioning measurement result to the first terminal or a positioning server.

With the terminal positioning apparatus provided in the embodiments of the fourth aspect of the disclosure, the second terminal performs calculation on the first sequence carried in the received S-PRS transmitted by the first terminal, obtains the corresponding positioning measurement data, and transmits it to the first terminal or the positioning server, relevant calculating-solving unit on the first terminal or the positioning server perform calculation and resolution to determine location information of the first terminal. In embodiments of the present disclosure, the second terminal performs calculation on the first sequence in the S-PRS to obtain a corresponding calculation result, and the first terminal or the positioning server performs calculation and resolution on the calculation result to determine the location information of the first terminal, realizing terminal positioning in a scenario that does not rely on a base station. Different S-PRSs carry different first sequences, which reduces the degree of interference between S-PRSs, improves the positioning accuracy of the first terminal, and optimizes the terminal positioning method.

Embodiments of a fifth aspect of the disclosure provide a device for transmitting a sidelink positioning reference signal, applied in a first terminal. The device includes: a memory, a transceiver, and a processor. The memory is configured to store a computer program; the transceiver is configured to transmit and receive data under a control of the processor; the processor is configured to read the computer program in the memory and perform following operations: generating a first sequence, and obtaining a sidelink positioning reference signal (S-PRS) according to the first sequence; and transmitting the S-PRS.

With the device for transmitting a sidelink positioning reference signal provided in the embodiments of the fifth aspect of the disclosure, after generating the first sequence, the corresponding S-PRS is obtained according to the first sequence, and the S-PRS is transmitted to a corresponding second terminal. In embodiments of the present disclosure, the first terminal can obtain different S-PRSs by generating different first sequences, thus avoiding mutual interference between S-PRSs transmitted in a multi-terminal scenario, reducing a probability of collision between S-PRSs, optimizing the transmission and application methods of the S-PRS, and improving the terminal positioning accuracy in the scenario of S-PRS-based terminal positioning.

Embodiments of a sixth aspect of the disclosure provide a device for transmitting a sidelink positioning reference signal, applied in a first terminal. The device includes: a memory, a transceiver, and a processor. The memory is configured to store a computer program; the transceiver is configured to transmit and receive data under a control of the processor; the processor is configured to read the computer program in the memory and perform following operations: receiving a sidelink positioning reference signal (S-PRS) transmitted by a first terminal, in which the S-PRS includes a first sequence; and determining a positioning measurement result according to the S-PRS, and transmitting the positioning measurement result to the first terminal or a positioning server.

With the terminal positioning device provided in the embodiments of the sixth aspect of the disclosure, the second terminal performs calculation on the first sequence carried in the received S-PRS transmitted by the first terminal, obtains the corresponding positioning measurement data, and transmits it to the first terminal or the positioning server, relevant calculating-solving unit on the first terminal or the positioning server perform calculation and resolution to determine location information of the first terminal. In embodiments of the present disclosure, the second terminal performs calculation on the first sequence in the S-PRS to obtain a corresponding calculation result, and the first terminal or the positioning server performs calculation and resolution on the calculation result to determine the location information of the first terminal, realizing terminal positioning in a scenario that does not rely on a base station. Different S-PRSs carry different first sequences, which reduces the degree of interference between S-PRSs, improves the positioning accuracy of the first terminal, and optimizes the terminal positioning method.

Embodiments of a seventh aspect of the disclosure provide a processor-readable storage medium having a computer program stored thereon. The computer program is configured to cause a processor to perform the method for transmitting a sidelink positioning reference signal in the embodiments of the first aspect of the disclosure.

With the processor-readable storage medium provided in the embodiments of the seventh aspect of the disclosure, after generating the first sequence, the corresponding S-PRS is obtained according to the first sequence, and the S-PRS is transmitted to a corresponding second terminal. In embodiments of the present disclosure, the first terminal can obtain different S-PRSs by generating different first sequences, thus avoiding mutual interference between S-PRSs transmitted in a multi-terminal scenario, reducing a probability of collision between S-PRSs, optimizing the transmission and application methods of the S-PRS, and improving the terminal positioning accuracy in the scenario of S-PRS-based terminal positioning.

Embodiments of an eighth aspect of the disclosure provide a processor-readable storage medium having a computer program stored thereon. The computer program is configured to cause a processor to perform the terminal positioning method in the embodiments of the second aspect of the disclosure.

With the processor-readable storage medium provided in the embodiments of the eighth aspect of the disclosure, the second terminal performs calculation on the first sequence carried in the received S-PRS transmitted by the first terminal, obtains the corresponding positioning measurement data, and transmits it to the first terminal or the positioning server, relevant calculating-solving unit on the first terminal or the positioning server perform calculation and resolution to determine location information of the first terminal. In embodiments of the present disclosure, the second terminal performs calculation on the first sequence in the S-PRS to obtain a corresponding calculation result, and the first terminal or the positioning server performs calculation and resolution on the calculation result to determine the location information of the first terminal, realizing terminal positioning in a scenario that does not rely on a base station. Different S-PRSs carry different first sequences, which reduces the degree of interference between S-PRSs, improves the positioning accuracy of the first terminal, and optimizes the terminal positioning method.

Embodiments of a ninth aspect of the disclosure provide a computer program product including a computer program. When the computer program is executed by a processor, the method for transmitting a sidelink positioning reference signal in the embodiments of the first aspect of the disclosure is performed.

Embodiments of a tenth aspect of the disclosure provide a computer program product including a computer program. When the computer program is executed by a processor, the terminal positioning method in the embodiments of the second aspect of the disclosure is performed.

Embodiments of an eleventh aspect of the disclosure provide a computer program including computer program codes. When the computer program codes are run on a computer, the computer is caused to perform the method for transmitting a sidelink positioning reference signal in the embodiments of the first aspect of the disclosure.

Embodiments of a twelfth aspect of the disclosure provide a computer program including computer program codes. When the computer program codes are run on a computer, the computer is caused to perform the terminal positioning method in the embodiments of the second aspect of the disclosure.

Additional aspects and advantages of the present disclosure will be partially provided in the following description. Parts will become apparent from the following description, or will be known through the practice of the present disclosure.

## BRIEF DESCRIPTION OF THE DRAWINGS

The above and/or additional aspects and advantages of the present disclosure will become apparent and easy to understand from the description of embodiments in combination with the following drawings.

FIG. 1 is a flowchart of a method for transmitting a sidelink positioning reference signal according to an embodiment of the disclosure.
FIG. 2 is a flowchart of a method for transmitting a sidelink positioning reference signal according to an embodiment of the disclosure.
FIG. 3 is a flowchart of a method for transmitting a sidelink positioning reference signal according to an embodiment of the disclosure.
FIG. 4 is flowchart of a method for transmitting a sidelink positioning reference signal according to an embodiment of the disclosure.
FIG. 5 is a flowchart of a terminal positioning method according to an embodiment of the disclosure.
FIG. 6 is a block diagram of an apparatus for transmitting a sidelink positioning reference signal according to an embodiment of the disclosure.
FIG. 7 is a block diagram of a terminal positioning apparatus according to an embodiment of the disclosure.
FIG. 8 is a block diagram of a device for transmitting a sidelink positioning reference signal according to an embodiment of the disclosure.
FIG. 9 is a block diagram of a terminal positioning device according to an embodiment of the disclosure.

## DETAILED DESCRIPTION

In embodiments of the present disclosure, the term "and/or" describes an association relationship of associated objects, indicating that there can be three relationships. For example, A and/or B, may mean three situations: A exists alone, A and B exist simultaneously, and B exists alone. The character "/" generally indicates that the associated objects are in an "or" relationship.

In embodiments of this disclosure, the term "plurality" refers to two or more than two, and other quantifiers are similar to it.

The technical solutions in embodiments of the present disclosure will be clearly and completely described below with reference to the accompanying drawings in embodiments of the present disclosure. Obviously, the described embodiments are only some of the embodiments of the present disclosure, not all of them. Based on the embodiments in the disclosure, all other embodiments obtained by those skilled in the art without making creative efforts fall within the scope of protection of the disclosure.

The disclosure is to solve the technical problem in related art that there is collision between the sequences used for S-PRS transmissions, causing mutual interference between the S-PRSs and reducing the terminal positioning accuracy, and the disclosure provides a method for transmitting a sidelink positioning reference signal. A first terminal can obtain different S-PRSs by generating different first sequences, thus avoiding mutual interference between S-PRSs transmitted in a multi-terminal scenario, reducing a probability of collision between S-PRSs, optimizing the transmission and application methods of the S-PRS, and improving the terminal positioning accuracy in the scenario of S-PRS-based terminal positioning.

The technical solutions provided by the embodiments of the present disclosure can be applied to a variety of systems, especially 5G systems. For example, applicable systems may be a global system of mobile communication (GSM) system, a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. Each of these various systems includes a terminal and a network device. The system may also include a core network part, such as an Evolved Packet System (EPS), a 5G System (5GS), etc.

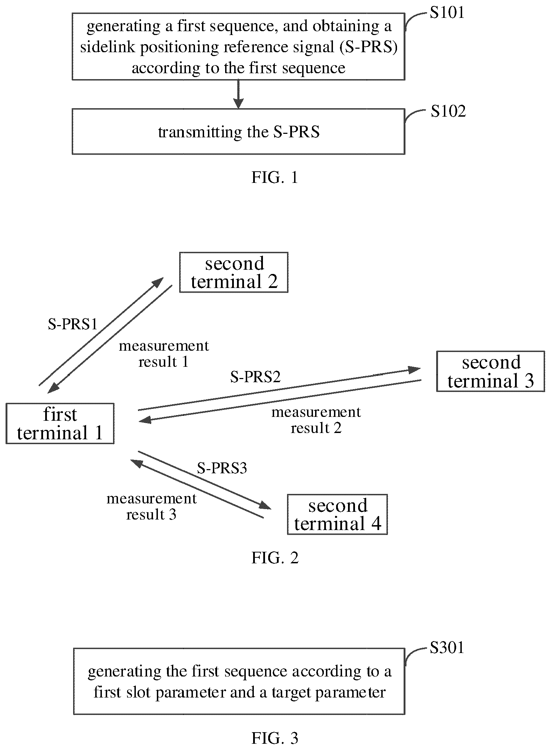

FIG. 1 is a flowchart of a method for transmitting a sidelink positioning reference signal according to an embodiment of the present disclosure.

It should be noted that an execution subject of the method for transmitting the sidelink positioning reference signal in the embodiment of the present disclosure is a device for transmitting a sidelink positioning reference signal. The device can be implemented by software and/or hardware. The device can be configured in a terminal. In some embodiments, the terminal may refer to a communication device that can be used to transmit and receive digital signals, and the terminal can transmit signals to the network device through channels.

The terminal involved in embodiments of the present disclosure may be a device that provides voice and/or data connectivity to users, a handheld device with a wireless connection function, or other processing devices connected to a wireless modem, etc. In different systems, the names of terminals may be different.

For example, in the 5G system, the terminal may be called user equipment (UE). A wireless terminal can communicate with one or more core networks (CN) via a Radio Access Network (RAN). The wireless terminal can be a mobile terminal, such as a mobile phone (also known as a "cellular phone") and a computer with a mobile terminal, which may be, for example, a portable, pocket-sized, handheld, computer-built-in or vehicle-mounted mobile device, which exchange speech and/or data with the radio access network.

For example, the wireless terminal may be Personal Communication Service (PCS) phones, cordless phones, Session Initiated Protocol (SIP) phones, Wireless Local Loop (WLL) stations, Personal Digital Assistants (PDA) and other device. The wireless terminal may also be called a system, a subscriber unit, a subscriber station, a mobile station, a mobile, a remote station, or an access point, a remote terminal, an access terminal, a user terminal, a user agent, a user device, which are not limited in the embodiments of the present disclosure.

The network device may be used to exchange received air frames with Internet Protocol (IP) packets and act as a router between the wireless terminal and the rest of an access network. The rest of the access network may include an Internet Protocol (IP) communication network. The network device may coordinate attribute management of an air interface.

For example, the network device involved in embodiments of the present disclosure may be a network device (such as a base transceiver station, BTS) in a Global System for Mobile communications (GSM) system or a Code Division Multiple Access (CDMA) system. Or, it can be a network device (NodeB) in a Wide-band Code Division Multiple Access (WCDMA) system, or an evolutional network device (an evolutional Node B, eNB or e-NodeB) in a long term evolution (LTE) system, a 5G base station (gNB) in the 5G network architecture (or next generation system), or a Home evolved Node B (HeNB), a relay node, a home base station (femto), a pico base station (pico), etc., which are not limited in the embodiments of the present disclosure. In some network structures, the network device may include a centralized unit (CU) node and distributed unit (DU) nodes, and the centralized unit and the distributed units may also be arranged geographically separately.

The network device and the terminal can each use one or more antennas for Multi-Input Multi-Output (MIMO) transmission. MIMO transmission can be single-user MIMO (SU-MIMO) or multi-user MIMO (MU-MIMO). Depending on the shape and number of antenna groups, MIMO transmission can be 2D-MIMO, 3D-MIMO, FD-MIMO or massive-MIMO, or it can be diversity transmission, precoding transmission or beamforming transmission, etc.

As shown in FIG. 1, the method is performed by a first terminal. The method for transmitting a sidelink positioning reference signal includes S101-S102.

S101, a first sequence is generated, and a sidelink positioning reference signal (S-PRS) is obtained according to the first sequence.

In embodiments of the present disclosure, the first terminal may obtain the S-PRS and transmit it to a corresponding second terminal.

The first terminal is a transmitter of the S-PRS, and the second terminal is a receiver of the S-PRS.

In implementation, the S-PRS can carry a sequence with a set function. By performing relevant reading and calculation on the carried sequence, positioning information of the first terminal and/or the second terminal can be obtained through the transmission of the S-PRS.

The sequence carried in the S-PRS may be determined as the first sequence of the first terminal that serving as the transmitter of the S-PRS.

In some scenarios, for multiple S-PRSs carrying the same first sequence, there may be mutual interference between the multiple S-PRSs, thereby affecting the accuracy of performing related functions.

For example, in a scenario of terminal positioning, the presence of S-PRSs carrying the same first sequence may affect the positioning accuracy of the first terminal.

Therefore, in the process of generating the first sequence, a set variable parameter can be obtained, and different values can be assigned to the variable parameters, so that the first terminal can generate different first sequences corresponding to different values. Thus, S-PRSs carry different first sequences are obtained, thereby avoiding mutual interference between multiple S-PRSs.

Further, the first terminal can generate element values constituting the first sequence based on a set algorithm, define a related attribute parameter of the first sequence, and generate, based on the generated element values and the defined related attribute parameter, the first sequence carried in the S-PRS transmitted by the terminal.

The first sequence may be a pseudo-random sequence of a set type, or may be another sequence type that satisfies a set condition, which is not limited here.

The corresponding S-PRS can be obtained according to the generated first sequence.

S102, the S-PRS is transmitted.

In implementation, there are a set communication channel between the first terminal and the second terminal, such as a Physical Sidelink Broadcast Channel (PSBCH), a Physical Sidelink Shared Channel (PSSCH), a Physical Sidelink Control Channel (PSCCH), or a Physical Sidelink Feedback Channel (PSFCH), etc.

The first terminal may transmit the S-PRS carrying the first sequence to the corresponding second terminal based on the set channel, such as the PSCCH.

For example, in the scenario of performing terminal positioning based on the S-PRS transmitted by the first terminal as shown in FIG. 2, FIG. 2 consists of a first terminal 1, a second terminal 2, a second terminal 3, and a second terminal 4.

The first terminal 1 serves as a transmitter of the S-PRS, and the second terminal 2, second terminal 3, and second terminal 4 serve as receivers of the S-PRS.

As shown in FIG. 2, the first terminal 1 transmits the S-PRS 1 to the second terminal 1 based on the PSCCH between the first terminal 1 and the second terminal 2. The first terminal 1 transmits S-PRS2 to the second terminal 3 based on the PSCCH between the first terminal 1 and the second terminal 3. The first terminal 1 transmits S-PRS3 to the second terminal 4 based on the PSCCH between the first terminal 1 and the second terminal 3.

In the scenario of performing the terminal positioning based on the S-PRS transmitted by the first terminal, the second terminal can perform relevant reading and calculation on the received first sequence carried by the first terminal for positioning, to generate a corresponding calculation measurement result, and transmits the calculation measurement result back to the first terminal.

In this scenario, the first terminal can determine its own location information based on the received measurement result returned by the second terminal.

As shown in FIG. 2, the second terminal 2 performs reading and calculation on the first sequence carried in the received S-PRS1 transmitted by the first terminal 1, and returns a calculated measurement result 1 to the first terminal 1. The first terminal 1 determines the relative location information between the first terminal 1 and the second terminal 2 based on the received measurement result 1, and then determines its own positioning information.

The second terminal 3 performs reading and calculation on the first sequence carried in the received S-PRS2 transmitted by the first terminal 1, and returns a calculated measurement result 2 to the first terminal 1. The first terminal 1 determines the relative location information between the first terminal 1 and the second terminal 3 based on the received measurement result 2, and then determines its own positioning information.

The second terminal 4 performs reading and calculation on the first sequence carried in the received S-PRS3 transmitted by the first terminal 1, and returns a calculated measurement result 3 to the first terminal 1. The first terminal 1 determines the relative location information between the first terminal 1 and the second terminal 3 based on the received measurement result 3, and then determines its own positioning information.

With the method for transmitting a sidelink positioning reference signal provided in the embodiments of the first aspect of the disclosure, after generating the first sequence, the corresponding S-PRS is obtained according to the first sequence, and the S-PRS is transmitted to a corresponding second terminal. In the present disclosure, the first terminal can obtain different S-PRSs by generating different first sequences, thus avoiding mutual interference between S-PRSs transmitted in a multi-terminal scenario, reducing a probability of collision between S-PRSs, optimizing the transmission and application methods of the S-PRS, and improving the terminal positioning accuracy in the scenario of S-PRS-based terminal positioning.

It should be noted that after the first terminal obtains the S-PRS according to the first sequence, a frequency resource corresponding to the S-PRS is different from a frequency resource used by a downlink positioning reference signal (DL-PRS) and/or a frequency resource used by an uplink sounding reference signal (UL SRS-Pos). The frequency resource includes at least one of a subcarrier, a resource pool, a bandwidth part (BWP), a carrier, or a frequency band.

In the above embodiment, the generation of the first sequence can be further understood with reference to FIG. 3. FIG. 3 is a flowchart of a method for transmitting a sidelink positioning reference signal according to an embodiment of the present disclosure. The method is performed by a first terminal. As shown in FIG. 3, the method includes S301.

S301, a first sequence is generated according to a first slot parameter and a target parameter.

In implementation, the first sequence has a mapped slot, and relevant parameter information of the mapped slot by the first sequence can be obtained, and the first sequence can be generated based on the obtained relevant parameter information.

The relevant parameter information of the slot mapped by the first sequence may be determined as the first slot parameter.

In some embodiments, the first slot parameter may include at least one of: a number of orthogonal frequency division multiplexing (OFDM) symbols contained in the slot mapped by the first sequence, an identifier of the slot mapped by the first sequence, or identifiers of the OFDM symbols in the slot mapped by the first sequence.

The number of the OFDM symbols contained in the slot mapped by the first sequence can be identified as $N_{symb}^{slot}$, the identifier of the slot mapped by the first sequence can be identified as $n_{s,f}^{\mu}$, and an identifier of a OFDM symbol in the slot mapped by the first sequence can be identified as $l$.

In embodiments of the present disclosure, there is a relevant set equation for the first sequence, and calculation can be performed based on the set equation according to the obtained first slot parameter, to generate the first sequence carried by the S-PRS transmitted by the first terminal.

In some embodiments, values of elements included in the first sequence and a sequence type to which the first sequence belongs can be obtained, and the first sequence carried in the S-PRS can be generated.

It should be noted that, the first sequence generated by the first terminal may be a GOLD sequence or other sequence types that meet the set condition, which is not limited here.

In some embodiments, the first sequence $r(m)$ may be defined based on an equation of

$$r(m) = \frac{1}{\sqrt{2}}(1 - 2c(2m)) + j\frac{1}{\sqrt{2}}(1 - 2c(2m+1))$$

. The $c(2m)$ and $c(2m+1)$ in the equation are defined by a pseudo-random sequence $c(n)$. The pseudo-random sequence $c(n)$ is generated based on a sequence $x_1(n)$ and a sequence $x_2(n)$. In some embodiments, m is a natural number.

The sequence $x_1(n)$ can be obtained based on the following equation:

$$x_1(n+31) = (x_1(n+3) + x_1(n)) \bmod 2 .$$

In the above equation, the sequence $x_1(n)$ is initialized as $x_1(0) = 1$, $x_1(n) = 0$, $n = 1,2,...,N$, $N$ is a positive integer.

Correspondingly, the sequence $x_2(n)$ is obtained based on the following equation:

$$x_2(n+31) = (x_2(n+3) + x_2(n+2) + x_2(n+1) + x_2(n)) \bmod 2 .$$

In the above equation, an initialization of the sequence $x_2(n)$ is expressed as

$$c_{init} = \sum_{i=0}^{N} x_2(i) \bullet 2^i.$$

Where, the parameter $c_{init}$ has a corresponding calculation equation, and the corresponding calculation equation can be determined based on relevant conditions, thereby determining an value of the parameter $c_{init}$.

In order to eliminate interference between S-PRSs carrying the first sequence, different values of the parameter $c_{init}$ can be obtained, and then different first sequences can be generated based on the obtained different values.

In the implementation, there is a defined value determination algorithm for the parameter $c_{init}$. There is a defined variable in the algorithm, and different values of the defined variable can be obtained through a defined method, thereby obtaining different values of the parameter $c_{init}$.

In some embodiments, the defined variable may be identified as the target parameter $n_{ID}$.

The target parameter $n_{ID}$ has a corresponding value range and a corresponding threshold value. Based on the relationship between the two, a calculation equation for calculating the value of parameter $c_{init}$ can be determined.

In some implementations, the value range of the target parameter $n_{ID}$ is set to $n_{ID} \in \{0,1,2,...,1023\}$, and the corresponding threshold value of $n_{ID}$ is 1024. In this scenario, the number of elements in the value range of $n_{ID}$ is 1024, which is equal to the threshold value 1024 corresponding to $n_{ID}$. thus, the value of the parameter $c_{init}$ can be obtained through the following equation:

$$c_{init} = (2^{10}(N_{symb}^{slot} n_{s,f}^{\mu} + l + 1)(2 n_{ID} + 1) + n_{ID}) \bmod 2^{31}.$$

In the above equation, $N_{symb}^{slot}$ is a number of OFDM symbols contained in each slot, $n_{s,f}^{\mu}$ is the identifier of the slot mapped by the first sequence, and $l$ is the identifiers of the OFDM symbols in the slot mapped by the first sequence.

In other implementations, the value range of the target parameter $n_{ID}$ is set to $n_{ID} \in \{0,1, 2,..., 4095\}$, and the corresponding threshold value of $n_{ID}$ is 1024. In this scenario, the number of elements in the value range of $n_{ID}$ is 4096, which is greater than the threshold value 1024 corresponding to $n_{ID}$, thus, the value of the parameter $c_{init}$ can be obtained through the following equation:

$$c_{init} = (\beta \left\lfloor \frac{n_{ID}}{M} \right\rfloor + 2^{10}(N_{symb}^{slot} n_{s,f}^{\mu} + l + 1)(2(n_{ID} \bmod M) + 1) + (n_{ID} \bmod M)) \bmod 2^{31}.$$

In the above equation, $N_{symb}^{slot}$ is the number of OFDM symbols contained in each slot, $n_{s,f}^{\mu}$ is the identifier of the slot mapped by the first sequence, and $l$ is the identifiers of the OFDM symbols in the slot mapped by the first sequence. Values of $\beta$ and $M$ can be determined according to the relevant attribute parameter of the first sequence. For example, the first sequence is set to be a gold sequence of length 31. In this scenario, the value of $\beta$ may be $\beta=2^{22}$, = 222, and $M$=1024.

In some embodiments, $\beta$ is a real number and $M$ is a positive integer.

It should be noted that, the value range to which the parameter $n_{ID}$ belongs can be obtained based on a set algorithm, and the threshold value corresponding to the parameter $n_{ID}$ can be determined based on the set simulation method, which is not limited here.

After determining the value of parameter $c_{init}$ according to the above equations, the values of the elements in the sequence $x_2(n)$ can be determined according to $$c_{init} = \sum_{i=0}^{N} x_2(i) \bullet 2^i$$ and the sequence $x_2(n)$ is determined according to the equation.

Correspondingly, after the sequence $x_1(n)$ is obtained according to the set equation, the pseudo-random sequence $c(n)$ is obtained according to the following equation:

$$c(n) = (x_1(n + N_c) + x_2(n + N_c)) \bmod 2$$

where, $N_c$ is a positive integer, and a value of $N_c$ can be determined according to the relevant attribute parameter of the first sequence. For example, the first sequence is set to be a gold sequence with a length of 31 orders. In this scenario, the value of $N_c$ can be determined as 1600.

The $c(2m)$ and $c(2m+1)$ are defined according to the pseudo-random sequence $c(n)$, and the defined $c(2m)$ and $c$

$$r(m) = \frac{1}{\sqrt{2}}(1 - 2c(2m)) + j\frac{1}{\sqrt{2}}(1 - 2c(2m+1))$$

(2$m$+1) are substituted into the equation to generate the first sequence $r(m)$ carried in the S-PRS transmitted by the terminal. In some embodiments, $m$ is a natural number.

With the method for transmitting a sidelink positioning reference signal provided by the embodiment of the present disclosure, the first sequence is defined by setting an equation, where the parameter sequence in the set equation is defined by a pseudo-random sequence. In the disclosure, different first sequences are generated based on the set pseudo-random sequence, which avoids the duplication of first sequences generated by different terminals in a multi-terminal scenario, and realizes interference elimination and/or interference randomization between the first sequences carried by the S-PRSs, thus reducing the degree of interference and the probability of collision between the S-PRSs transmitted in the multi-terminal scenario, optimizing the transmission and application methods of the S-PRS, and thereby improving the terminal positioning accuracy in the scenario of S-PRS-based terminal positioning.

In the above embodiments, a value of the target parameter $n_{ID}$ can be obtained according to the following methods.

In some implementations, the first terminal can transmit S-PRSs to multiple second terminals at the same time. The first terminal can generate different first sequences according to different values of the parameter $n_{ID}$, and then obtain the S-PRSs carrying the different first sequences.

The value of the parameter $n_{ID}$ can be randomly configured or determined by a set an algorithm.

In some embodiments, the $n_{ID}$ may be determined according to pre-configuration information or configuration information.

In implementations, a location where the terminal is located may be unable to be covered by a base station. In this scenario, the $n_{ID}$ corresponding to the first sequence carried on the S-PRS can be obtained from the pre-configuration information or configuration information corresponding to the first terminal.

In the process of generating the first sequence, the first terminal may randomly assign a value to the $n_{ID}$ through the pre-configuration information or configuration information. According to the value of the $n_{ID}$. the corresponding first sequence is generated, and thus the corresponding S-PRS is obtained.

It should be noted that, to prevent the S-PRS between the first terminal and the second terminal from being interfered by other S-PRSs, values of the $n_{ID}$ corresponding to the first sequences carried by different S-PRS are different.

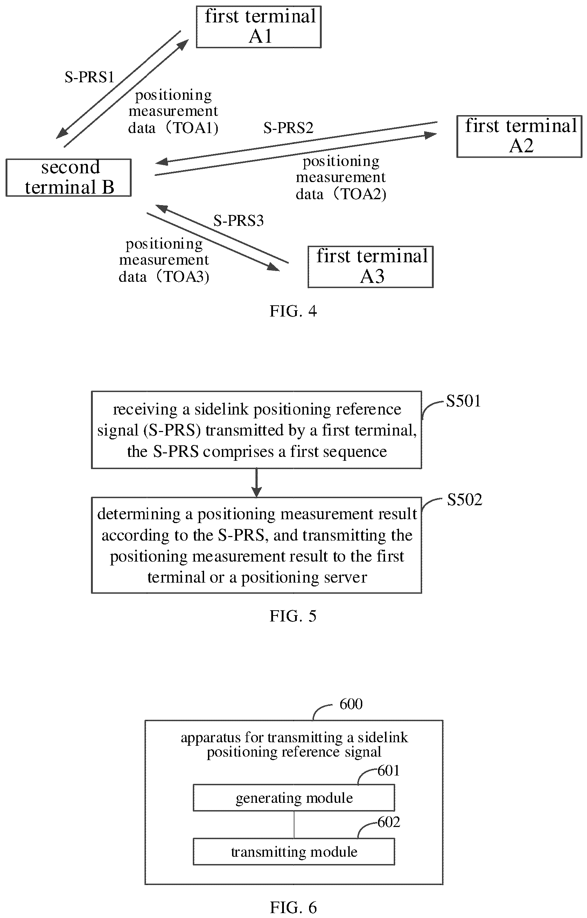

As shown in FIG. 4, FIG. 4 is a multi-terminal scenario composed of a first terminal A1, a first terminal A2, a first terminal A3 and a second terminal B. In this scenario, the first terminal A1, the first terminal A2, and the first terminal A3 transmit S-PRSs to the second terminal B at the same time.

For example, in the scenario shown in FIG. 4, the value range of the $n_{ID}$ is $n_{ID} \in \{0,1,2,...,1023\}$.

The first terminal A1 can determine that a random value of the corresponding $n_{ID}$ is 129 according to the pre-configuration information or configuration information, and then generate a corresponding first sequence 1, thereby obtaining the S-PRS 1 transmitted by the first terminal A1.

Correspondingly, the first terminal A2 can determine that a random value of the corresponding $n_{ID}$ is 67 according to the pre-configuration information or configuration information, and then generate a corresponding first sequence 2, thereby obtaining the S-PRS2 transmitted by the first terminal A2. The first terminal A3 can determine that a random value of the corresponding $n_{ID}$ is 805 according to the pre-configuration information or configuration information, and then generate a corresponding first sequence 3, thereby obtaining the S-PRS3 transmitted by the first terminal A3.

The first terminal A1 transmits the S-PRS1 to the second terminal B, the first terminal A2 transmits the S-PRS2 to the second terminal B, and the first terminal A3 transmits the S-PRS3 to the second terminal B.

As shown in FIG. 4, the S-PRS1, S-PRS2 and S-PRS3 obtained based on different values of the $n_{ID}$ make the interference randomization between the S-PRS1, S-PRS2 and S-PRS3 transmitted from the first terminal A1, the first terminal A2 and the first terminal A3 to the second terminal B to be realized, and the interference randomization between S-PRSs in the multi-terminal scenarios is realized.

In some embodiments, the $n_{ID}$ may be determined according to identification information of the S-PRS.

In implementation, the S-PRS generated by the first terminal has set identification information, and different S-PRSs have different identification information.

Therefore, the $n_{ID}$ can be assigned a value according to the identification information of the S-PRS, so that the first terminal can generate different first sequences according to different values of the $n_{ID}$. thereby obtaining S-PRSs carrying different first sequences.

For example, identification information of the S-PRS transmitted by the first terminal A1 to the second terminal B is determined as S-PRS1, identification information of the S-PRS transmitted by the first terminal A2 to the second terminal B is determined as S-PRS2, and identification information of the S-PRS transmitted by the first terminal A3 to the second terminal B is determined as S-PRS3.

The value range of the $n_{ID}$ is set as $n_{ID} \in \{0,1,2,...,1023\}$, then the $n_{ID}$ corresponding to the first sequence 1 carried by S-PRS1 is assigned a value of 1, the $n_{ID}$ corresponding to the first sequence 2 carried by S-PRS2 is assigned a value of 2, and the $n_{ID}$ corresponding to the first sequence 3 carried by S-PRS3 is assigned a value of 3.

Further, the first terminal A1 can generate a corresponding first sequence 1 when the $n_{ID}$ is assigned with a value of 1, and then obtain the corresponding S-PRS1 and transmit it to the second terminal B. The first terminal A2 can generate a corresponding first sequence 2 when the $n_{ID}$ is assigned a value of 2, and then obtain the corresponding S-PRS2, and transmit it to the second terminal B. The first terminal A3 can generate a corresponding first sequence 3 when the $n_{ID}$ is assigned a value of 3, and then obtain the corresponding S-PRS3, and transmits it to the second terminal B.

Based on the S-PRS1, S-PRS2 and S-PRS3 obtained based on different $n_{ID}$ values, interference randomization between the S-PRS1, the S-PRS3 and the S-PRS3 that are simultaneously transmitted by the first terminal A1, the first terminal A2 and the first terminal A3 to the second terminal B is realized.

In some embodiments, the $n_{ID}$ may be determined according to identification information of the first terminal and/or the identification information of the second terminal.

In implementation, the identification information of the first terminal and/or the second terminal has identification uniqueness. Therefore, the value of the $n_{ID}$ can be determined based on the identification information of the first terminal and/or the identification information of the second terminal.

In the scenario where the first terminal transmits the S-PRS to the second terminal, the first terminal serves as the transmitter of S-PRS, and its identification information can be determined as a source point identifier *sourceID*. The second terminal serves as the receiver of the S-PRS, and its identification information can be determined as a destination identifier *destinationID*.

In some embodiments, calculation can be performed according to the following equation to obtain the value of the $n_{ID}$: $n_{ID}$ = (*sourceID* + *destinationID*)mod$Z_1$.

In the above equation, $Z_1$ is a positive integer. $Z_1$ can be determined as the value of the number of elements in the value range corresponding to the $n_{ID}$. That is to say, in the scenario where the value range corresponding to the $n_{ID}$ is $n_{ID} \in \{0,1,2,..., 4095\}$, $Z_1$ is 4096.

For example, the *sourceID* of the first terminal can be represented by 8 bits, with a value of 20, the *destinationID* of the second terminal can be represented by 16 bits, with a value of 4104, and the corresponding value range of the $n_{ID}$ is $n_{ID} \in \{0,1, 2,..., 4095\}$, Z1 is 4096.

Further, as shown in the following equation:

$$n_{ID} = (20 + 4104) \bmod Z4096 = 28 .$$

It can be seen from this that the first terminal can generate the corresponding first sequence based on the $n_{ID}$ with a value of 28, and then obtain the corresponding S-PRS and transmit it to the corresponding second terminal.

The $n_{ID}$ is determined based on the identification information of the first terminal and/or the identification information of the second terminal, thereby realizing interference elimination between the first sequences generated by the first terminal, and avoiding mutual interference between the S-PRSs transmitted by the first terminal.

In some embodiments, the $n_{ID}$ may be determined based on area identification information.

In implementation, both the first terminal and/or the second terminal have a set area to which they belong, and the area may be a geographical area divided along the geographical dimension to which the first terminal and/or the second terminal belongs. The geographical area has set area identification information.

In embodiments of the present disclosure, the identification information of the geographical area has a unique identifier. Therefore, the $n_{ID}$ can be assigned a value according to the identification information corresponding to the geographical area to which the first terminal and/or the second terminal belongs.

The identification information corresponding to the geographical area to which the first terminal and/or the second terminal belongs may be determined as an area identifier.

The area identifier of the geographical area where the first terminal and/or the second terminal is located can be obtained from a cyclic redundancy check code (CRC) of sidelink control information (SCI) on a PSCCH.

It should be noted that the PSCCH is an associated channel through which the first terminal transmit the S-PRS.

In some embodiments, the $n_{ID}$ may be determined based on priority information.

In implementation, the first terminal serves as the transmitter of the S-PRS and has a set priority order. The first terminal may determine its own priority based on the received priority information.

In some embodiments, the priority information may include information related to a priority of a data packet received by the first terminal, and may also include information related to a terminal positioning priority determined based on an efficiency requirement and an accuracy requirement for the first terminal to perform terminal positioning.

A priority of the first terminal may be determined based on the information related to the priority of the data packet received by the first terminal.

A priority of the first terminal may also be determined based on the information related to the terminal positioning priority received by the first terminal.

In some implementations, the priority has a corresponding digital identifier, and the target parameter $n_{ID}$ can be assigned a value according to a value of the digital identifier corresponding to the priority of the first terminal.

It should be noted that the information related to the priority of the data packet received by the first terminal and the information related to the terminal positioning priority can be obtained from the SCI of the associated channel PSCCH of the S-PRS transmitted by the first terminal, or from a high layer signaling received by the first terminal, which is not limited here.

In order to accurately assign a value for the $n_{ID}$, the area identification information and the priority information can be combined, and the $n_{ID}$ can be determined according to the combination.

In some embodiments, a target priority of the first terminal may be determined from the priority information.

The priority information received by the first terminal may include priority information of other terminals. Therefore, based on a set identification information of the first terminal, the priority information related to the first terminal can be obtained from all the priority information. Thereby, the target priority corresponding to the first terminal is determined.

In some embodiments, priorities corresponding to the terminals can be divided into a first candidate priority and a second candidate priority. The first terminal can determine a candidate priority to which the first terminal belongs from the relevant information of the first candidate priority and the second candidate priority, and determine the candidate priority as its corresponding target priority.

Further, there are corresponding $n_{ID}$ acquisition methods for the first candidate priority and the second candidate priority respectively. Therefore, after determining the target priority corresponding to the first terminal, the acquisition method corresponding to the target priority can be determined as the method for the first terminal to obtain the $n_{ID}$.

In some embodiments, the target priority may be the first candidate priority, and the $n_{ID}$ can be obtained according to the following equation:

$$n_{ID} = (zoneID)\bmod Z_2 .$$

In the above equation, *zoneID* is a value of an area identifier to which the first terminal belongs, and $Z_2$ is a positive integer.

In some embodiments, the target priority may be the second candidate priority, then nID the $n_{ID}$ can be obtained according to the following equation:

$$n_{ID} = n_{ID0} + (zoneID)\bmod Z_3 .$$

In the above equation, *zoneID* is a value of an area identifier to which the first terminal belongs, $n_{ID0}$ is a positive integer, and $Z_3$ is a positive integer.

The following is further explained with examples.

The value range of $n_{ID}$ is $n_{ID} \in \{0,1,2,...,4095\}$, and the priority P corresponding to the first terminal is divided into eight levels, i.e., 0, 1, 2, 3, 4, 5, 6, and 7 in total, in which priority 0 is higher than priority 1, priority 1 is higher than priority 2, ..., priority 6 is higher than priority 7. Priority 0 and priority 1 can be classified as first candidate priorities, and priority 2, priority 3, priority 4, priority 5, priority 6, and priority 7 can be classified as second candidate priorities.

The value of the area identifier to which the first terminal belongs is 2138.

In a scenario where the target priority of the first terminal is the first candidate priority, the relevant parameter values can be substituted into the following equation:

$$n_{ID} = (2138)\bmod 2048 = 90 .$$

In the above equation, $Z_2$ is half of the number of elements included in the value range $n_{ID} \in \{0,1,2,...,4095\}$ of $n_{ID}$.

In a scenario where the target priority of the first terminal is the second candidate priority, the relevant parameter values can be substituted into the following equation:

$$n_{ID} = 2048 + (2138)\bmod 2048 = 2138 .$$

In the above equation, $n_{ID0}$ is a middle value in the value range $n_{ID} \in \{0,1,2,...,4095\}$ of $n_{ID}$, and $Z_3$ half of the number of elements included in the value range $n_{ID} \in \{0,1,2,...,4095\}$ of $n_{ID}$.

The value of the $n_{ID}$ is determined according to the area identification information and corresponding priority information of the first terminal, and different first sequences are generated according to the values of 90 and 2138 respectively, and S-PRSs carrying different first sequences are obtained.

In some embodiments, the $n_{ID}$ may be determined according to a CRC of SCI of the first terminal on a PSCCH.

In implementation, during operation, the first terminal can determine the $n_{ID}$ by a method correlating with the CRC of SCI on the PSCCH according to a set calculation equation.

The SCI on the PSCCH and the S-PRS are transmitted in the same slot.

In some embodiments, the $n_{ID}$ can be determined based on the following equation:

$$n_{ID} = N_{ID}^{X} \bmod 2^{10},$$

where, the $N_{ID}^{X}$ is a decimal representation value of the CRC, the CRC is generated according to a payload in the SCI carried by the PSCCH.

For example, the first terminal transmits S-PRS1 and PSCCH1 at the same time in the same slot, and a CRC of SCI on the PSCCH1 is a binary bit sequence. For example, the CRC of the SCI on the PSCCH1 is 10000100011, it can be determined that $N_{ID}^{X} = 1059$ according to the above equation. Then the $n_{ID}$ is determined according to the following equation:

$$n_{ID} = N_{ID}^{X} \bmod 2^{10} = 1059 \bmod 2^{10} = 35.$$

Based on the CRC in the SCI on the PSCCH transmitted in the same slot as the S-PRS, $n_{ID}$ with different values are obtained, thereby generating different first sequences, and then the S-PRSs carrying different first sequences are obtained.

In some embodiments, the $n_{ID}$ may be determined based on a high layer signaling.

In implementation, the first terminal may receive the high layer signaling. The high layer signaling may carry relevant information of a scrambling identifier (scramblingID) and a sequence generation configuration (sequenceGenerationConfig). Therefore, the first terminal may determine the $n_{ID}$ according to the scrambling identifier (scramblingID) or the sequence generation configuration (sequenceGenerationConfig) carried in a high-layer signaling parameter.

It should be noted that the value of the parameter $n_{ID}$ can be obtained based on any one of the above methods, or can be obtained based on a combination of multiple methods among the above methods, which is not limited here.

With the method for transmitting the sidelink positioning reference signal provided in the disclosure, the value of $n_{ID}$ is determined according to different methods, so that the first terminal generates different first sequences corresponding to different $n_{ID}$ values, thereby obtaining different S-PRSs, so as to eliminate interference between the first sequences, avoid mutual interference between S-PRSs transmitted in the multi-terminal scenario, reduce a probability of collision between S-PRSs, optimize transmission and application methods of the S-PRS, and improve a terminal positioning accuracy in a scenario of S-PRS-based terminal positioning.

During implementation, a second terminal can perform related reading and calculation on a first sequence in a received S-PRS transmitted by a first terminal. This can be further understood with reference to FIG. 5. FIG. 5 is a flowchart of a terminal positioning method according to an embodiment of the present disclosure. The method is performed by the second terminal. As shown in FIG. 5, the method includes S501-S502.

S501, a sidelink positioning reference signal (S-PRS) transmitted by a first terminal is received, and the S-PRS includes a first sequence.

In embodiments of the present disclosure, the second terminal is a receiver of the S-PRS, having a set data receiving interface, and can receive the S-PRS transmitted by the first terminal based on a set channel connected to the interface.

The second terminal may be the same hardware device as the first terminal.

S502, a positioning measurement result is determined according to the S-PRS, and the positioning measurement result is transmitted to the first terminal or a positioning server.

The second terminal can perform relevant result reading on the first sequence in the received S-PRS, to obtain corresponding positioning measurement data.

The positioning measurement data may include time of arrival (TOA), or may include other parameters that can be used determine location information of the first terminal.

In some embodiments, the second terminal can transmit the obtained positioning measurement data to the first terminal, and calculation and resolution is performed on the positioning measurement data according to a set calculating-solving unit configured on the first terminal, thereby determining the location information of the first terminal.

For example, as shown in FIG. 4, the first terminal A1 transmits S-PRS1 to the second terminal B, where the S-PRS1 carries the first sequence 1. The second terminal B reads and calculates the first sequence 1 in the received S-PRS1, and obtains the corresponding positioning measurement data TOA1.

The second terminal B transmits the positioning measurement data TOA1 to the first terminal A1, and the related calculating-solving unit configured on the first terminal A1 performs calculation and resolution, to determine the location information of the first terminal A1 according to TOA1.

The first terminal A2 transmits S-PRS2 to the second terminal B, where the S-PRS2 carries the first sequence 2. The second terminal B reads and calculates the first sequence 2 in the received S-PRS2, and obtains the corresponding positioning measurement data TOA2.

The second terminal B transmits the positioning measurement data TOA2 to the first terminal A2, and the related calculating-solving unit configured on the first terminal A2 performs calculation and resolution, to determine the location information of the first terminal A2 according to TOA2.

The first terminal A3 transmits S-PRS3 to the second terminal B, where the S-PRS3 carries the first sequence 3. The second terminal B reads and calculates the first sequence 3 in the received S-PRS3, and obtains the corresponding positioning measurement data TOA3.

The second terminal B transmits the positioning measurement data TOA3 to the first terminal A3, and the related calculating-solving unit configured on the first terminal A3 performs calculation and resolution, to determine the location information of the first terminal A3 according to TOA3.

In other embodiments, the second terminal may transmit the obtained positioning measurement data to the positioning server, and calculation and resolution is performed on the positioning measurement data according to a set calculating-solving unit configured on the positioning server, thereby determining the location information of the first terminal.

For example, the first terminal A transmits an S-PRS to the second terminal B, where the S-PRS carries the first sequence. The second terminal B reads and calculates the first sequence in the received S-PRS to obtain the corresponding positioning measurement amount TOA.

The second terminal B transmits the positioning measurement amount TOA to the positioning server, and a relevant calculating-solving unit in the positioning server performs calculation and resolution on the TOA, to determine the location information of the first terminal.

With the terminal positioning apparatus provided in the embodiments of of the disclosure, the second terminal performs calculation on the first sequence carried in the received S-PRS transmitted by the first terminal, obtains the corresponding positioning measurement data, and transmits it to the first terminal or the positioning server, the relevant calculating-solving unit on the first terminal or the positioning server perform calculation and resolution to determine the location information of the first terminal. In the present disclosure, the second terminal performs calculation on the first sequence in the S-PRS to obtain a corresponding calculation result, and the first terminal or the positioning server performs calculation and resolution on the calculation result to determine the location information of the first terminal, thereby realizing terminal positioning in a scenario that does not rely on a base station. Different S-PRSs carry different first sequences, which reduces the degree of interference between S-PRSs, improves the positioning accuracy of the first terminal, and optimizes the terminal positioning method.

Corresponding to the method for transmitting a sidelink positioning reference signal provided in the above embodiments, embodiments of the present disclosure also provide an apparatus for transmitting a sidelink positioning reference signal. The apparatus for transmitting a sidelink positioning reference signal provided by embodiments of the present disclosure corresponds to the method for transmitting a sidelink positioning reference signal provided in the above-mentioned embodiments. Therefore, the above-mentioned implementation of the method for transmitting a sidelink positioning reference signal is also applicable to the apparatus for transmitting a sidelink positioning reference signal provided in the embodiments of the present disclosure, which will not be described in detail in the following embodiments.

FIG. 6 is a block diagram of an apparatus for transmitting a sidelink positioning reference signal according to an embodiment of the present disclosure. As shown in FIG. 6, the apparatus 600 for transmitting a sidelink positioning reference signal is applied to a first terminal and includes a generating module 601 and a transmitting module 602.

The generating module 601 is configured to generate a first sequence and obtain a sidelink positioning reference signal (S-PRS) according to the first sequence.

The transmitting module 602 is configured to transmit the S-PRS.

In embodiments of the disclosure, the generating module 601 is further configured to:

generate the first sequence according to a first slot parameter and a target parameter.

In embodiments of the disclosure, the first slot parameter includes at least one of: a number of orthogonal frequency division multiplexing (OFDM) symbols contained in a slot mapped by the first sequence, an identifier of the slot mapped by the first sequence, or identifiers of the OFDM symbols in the slot mapped by the first sequence.

In embodiments of the disclosure, the generating module 601 is further configured to: initialize a pseudo-random sequence $c(n)$ according to the first slot parameter and the target parameter, where a method for the initializing is as follows:

$$c_{init} = (2^{10}(N_{symb}^{slot} n_{s,f}^{\mu} + l + 1)(2n_{ID} + 1) + n_{ID}) \bmod 2^{31} ;$$

or,

$$c_{init} = (\beta \left\lfloor \frac{n_{ID}}{M} \right\rfloor + 2^{10}(N_{symb}^{slot} n_{s,f}^{\mu} + l + 1)(2(n_{ID} \bmod M) + 1) + (n_{ID} \bmod M)) \bmod 2^{31} ;$$

in which, $n_{ID}$ is the target parameter, $N_{symb}^{slot}$ is a number of OFDM symbols contained in each slot, $n_{s,f}^{\mu}$ is the identifier of the slot mapped by the first sequence, and $l$ is the identifiers of the OFDM symbols in the slot mapped by the first sequence.

In some embodiments, $\beta$ is a real number, and $M$ is a positive integer.

In embodiments of the disclosure, the generating module 601 is further configured to:

define the first sequence $r(m)$ based on $$r(m) = \frac{1}{\sqrt{2}}(1 - 2c(2m)) + j\frac{1}{\sqrt{2}}(1 - 2c(2m+1))$$ , in which, $c(2m)$ and $c(2m+1)$ are defined by a pseudo-random sequence $c(n)$. In some embodiments, $m$ is a natural number.

In embodiments of the disclosure, the pseudo-random sequence $c(n)$ is generated based on a sequence $x_1(n)$ and a sequence $x_2(n)$, in which,

$x_1(n+31)=(x_1(n+3)+x_1(n)) \bmod 2$, in which the sequence $x_1(n)$ is initialized as $x_1(0)=1$, $x_1(n)=0$, $n=1,2,..., N$, $N$ is a positive integer;

$x_2(n+31)=(x_2(n+3)+x_2(n+2)+x_2(n+1)+x_2(n)) \bmod 2$, in which an initialization of the sequence $x_2(n)$ is expressed as: $$c_{init} = \sum_{i=0}^{N} x_2(i) \bullet 2^i$$ ;

the pseudo-random sequence $c(n)$ is defined as: $c(n)=(x_1(n+N_c)+x_2(n+N)) \bmod 2$, where $N_c$ is a positive integer.

In embodiments of the disclosure, the $n_{ID}$ is determined in at least one of the following ways: determining the $n_{ID}$ according to pre-configuration information or configuration information; determining the $n_{ID}$ according to identification information of the S-PRS; determining the $n_{ID}$ according to identification information of the first terminal and/or identification information of a second terminal; determining the $n_{ID}$ according to area identification information; determining the $n_{ID}$ according to priority information; determining the $n_{ID}$ according to a cyclic redundancy check code (CRC) of sidelink control information (SCI) of the first terminal on a physical sidelink control channel (PSCCH); or determining the $n_{ID}$ according to a high layer signaling.

In embodiments of the disclosure, the area identification information includes an area identifier of a geographical area where the first terminal and/or the second terminal is located; the priority information includes a terminal positioning priority or a data packet priority.

In embodiments of the disclosure, the area identification information is indicated by the SCI on the PSCCH; the priority information is indicated by the SCI on the PSCCH and/or a high layer signaling; in which the PSCCH is an associated channel through which the first terminal transmits the S-PRS.

In embodiments of the disclosure, a frequency resource corresponding to the S-PRS is different from a frequency resource used by a downlink positioning reference signal (DL-PRS) and/or a frequency resource used by an uplink sounding reference signal (UL SRS-Pos), in which the frequency resource includes at least one of a subcarrier, a resource pool, a bandwidth part (BWP), a carrier, or a frequency band.

In embodiments of the disclosure, the generating module 601 is further configured to determine the $n_{ID}$ according to the CRC of the SCI of the first terminal on the PSCCH based on the following equation: $n_{ID} = N_{ID}^{X} \bmod 2^{10}$ ,

in which, the $n_{ID}$ is the target parameter, the $N_{ID}^{X}$ is a decimal representation value of the CRC, the CRC is generated according to a payload in the SCI carried by the PSCCH, and the SCI on the PSCCH and the S-PRS are transmitted in a same slot.

In embodiments of the disclosure, the generating module 601 is further configured to determine the $n_{ID}$ according to the identification information of the first terminal and/or the identification information of the second terminal based on the following equation:

$$n_{ID} = (sourceID + destinationID) \bmod Z_1$$

in which, the $n_{ID}$ is the target parameter, the *sourceID* is the identification information of the first terminal, the *destinationID* is the identification information of the second terminal, and $Z_1$ is a positive integer.

In embodiments of the disclosure, the generating module 601 is further configured to determine a target priority of the first terminal from the priority information; in response to the target priority being a first candidate priority, determine the $n_{ID}$ according to: $n_{ID} = (zoneID)\bmod Z_2$, in which the $n_{ID}$ is the target parameter, and the $Z_2$ is a positive integer; and in response to the target priority being a second candidate priority, determining the $n_{ID}$ according to: $n_{ID} = n_{ID0} + (zoneID)$ $\bmod Z_3$, in which the $n_{ID}$ is the target parameter, the $n_{ID0}$ is a positive integer, and the $Z_3$ is a positive integer.

In embodiments of the disclosure, the generating module 601 is further configured to determine the $n_{ID}$ from a scrambling identifier (ID) or a sequence generation configuration (sequenceGenerationConfig) in a high-layer signaling parameter.

In embodiments of the disclosure, the first sequence is a GOLD sequence.

It should be noted that the division of units in the embodiments of the present disclosure is schematic and is only a logical function division. In actual implementation, there may be other division methods. In addition, each function unit in various embodiments of the present disclosure may be integrated into one processing unit, or each unit may exist physically alone, or two or more units may be integrated into one unit. The above integrated unit can be implemented in the form of hardware or software functional units.

The integrated unit may be stored in a processor-readable storage medium if it is implemented in the form of a software function unit and sold or used as an independent product.

Based on this understanding, the technical solution of the present disclosure essentially or partially contributes to the relate art, or all or part of the technical solution can be embodied in the form of a software product, which is stored in a storage medium and includes several instructions to cause a computer device (which can be a personal computer, a server, or a network device, etc.) or a processor to execute all or part of the steps of the methods of various embodiments of the present disclosure. The aforementioned storage media include various media that can store program code, such as: as a USB flash disk drive, a portable hard disk drive, a Read Only Memory (ROM), a Random Access Memory (RAM), a magnetic disk, or an optical disk.

With the apparatus for transmitting a sidelink positioning reference signal provided in the embodiments of the disclosure, after generating the first sequence, the corresponding S-PRS is obtained according to the first sequence, and the S-PRS is transmitted to a corresponding second terminal. In the present disclosure, the first terminal can obtain different S-PRSs by generating different first sequences, thus avoiding mutual interference between S-PRSs transmitted in a multi-terminal scenario, reducing a probability of collision between S-PRSs, optimizing the transmission and application methods of the S-PRS, and improving the terminal positioning accuracy in the scenario of S-PRS-based terminal positioning.

Corresponding to the terminal positioning method provided in the above embodiments, embodiments of the present disclosure also provide a terminal positioning apparatus. The terminal positioning apparatus provided by embodiments of the present disclosure corresponds to the terminal positioning method provided in the above-mentioned embodiments. Therefore, the above-mentioned implementation of the terminal positioning method is also applicable to the terminal positioning apparatus provided in the embodiments of the present disclosure, which will not be described in detail in the following embodiments.

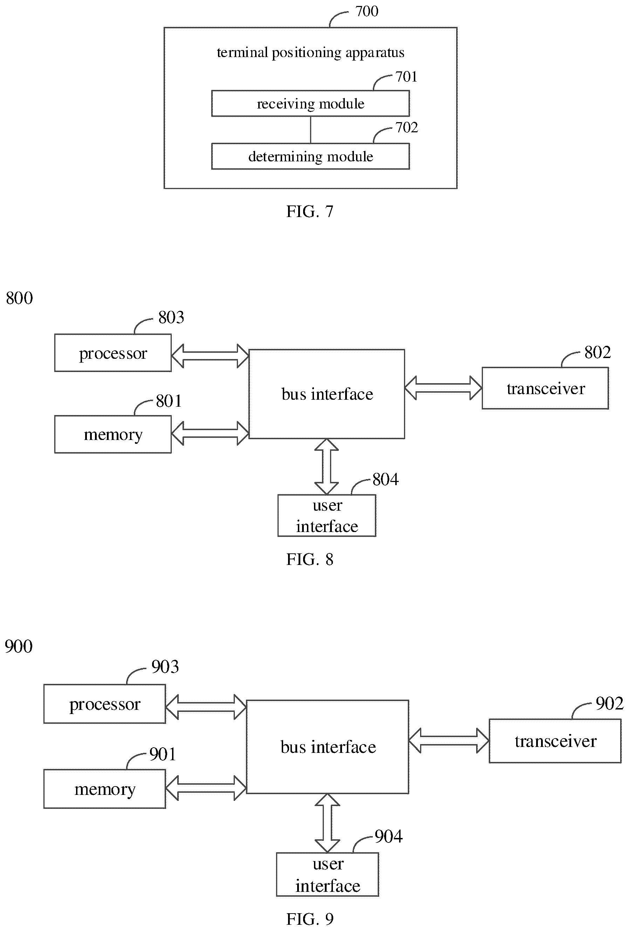

FIG. 7 is a block diagram of a terminal positioning apparatus according to an embodiment of the present disclosure. As shown in FIG. 7, a terminal positioning apparatus 700 is applied to a second terminal and includes a receiving module 701 and a determining module 702.

The receiving module 701 is configured to receive a sidelink positioning reference signal (S-PRS) transmitted by a first terminal, where the S-PRS includes a first sequence.

The determining module 702 is configured to determine a positioning measurement result according to the S-PRS, and transmit the positioning measurement result to the first terminal or a positioning server.

It should be noted that the division of units in the embodiment of the present disclosure is schematic and is only a logical function division. In actual implementation, there may be other division methods. In addition, each functional unit in various embodiments of the present disclosure may be integrated into one processing unit, or each unit may exist physically alone, or two or more units may be integrated into one unit. The above integrated units can be implemented in the form of hardware or software functional units.

It should be noted that the division of units in the embodiments of the present disclosure is schematic and is only a logical function division. In actual implementation, there may be other division methods. In addition, each function unit in various embodiments of the present disclosure may be integrated into one processing unit, or each unit may exist physically alone, or two or more units may be integrated into one unit. The above integrated unit can be implemented in the form of hardware or software functional units.

The integrated unit may be stored in a processor-readable storage medium if it is implemented in the form of a software function unit and sold or used as an independent product.

Based on this understanding, the technical solution of the present disclosure essentially or partially contributes to the relate art, or all or part of the technical solution can be embodied in the form of a software product, which is stored in a storage medium and includes several instructions to cause a computer device (which can be a personal computer, a server, or a network device, etc.) or a processor to execute all or part of the steps of the methods of various embodiments of the present disclosure. The aforementioned storage media include various media that can store program code, such as: as a USB flash disk drive, a portable hard disk drive, a Read Only Memory (ROM), a Random Access Memory (RAM), a magnetic disk, or an optical disk.

With the terminal positioning apparatus provided in the embodiments of the disclosure, the second terminal performs calculation on the first sequence carried in the received S-PRS transmitted by the first terminal, obtains the corresponding positioning measurement data, and transmits it to the first terminal or the positioning server, relevant calculating-solving unit on the first terminal or the positioning server perform calculation and resolution to determine location information of the first terminal. In the present disclosure, the second terminal performs calculation on the first sequence in the S-PRS to obtain a corresponding calculation result, and the first terminal or the positioning server performs calculation and resolution on the calculation result to determine the location information of the first terminal, realizing terminal positioning in a scenario that does not rely on a base station. Different S-PRSs carry different first sequences, which reduces the degree of interference between S-PRSs, improves the positioning accuracy of the first terminal, and optimizes the terminal positioning method.

It should be noted that the above-mentioned apparatuses provided in the embodiments of the present disclosure can implement all the method steps implemented in the above-mentioned method embodiments, and can achieve the same technical effect. The parts and beneficial effects same as the method embodiments in this embodiment will not be described in detail.

FIG. 8 is a block diagram of a device for transmitting a sidelink positioning reference signal according to an embodiment of the present disclosure. The device is applied to a first terminal.

As shown in FIG. 8, the device 800 for transmitting a sidelink positioning reference signal includes a memory 801, a transceiver 802, a processor 803 and a user interface 804. The memory 801 is used to store a computer program; the transceiver 802 is used to transmit and receive data under the control of the processor 803; the processor 803 is used to read the computer program in memory 801 and perform the following operations:

> generating a first sequence, and obtaining a sidelink positioning reference signal (S-PRS) according to the first sequence; and
> transmitting the S-PRS.

In FIG. 8, a bus architecture may include any number of interconnected buses and bridges, specifically including various circuits linked together of one or more processors represented by the processor 803 and one or more memories represented by the memory 801. The bus architecture can also link together various other circuits such as peripherals, voltage regulators, and power management circuits, which are all well known in the art and therefore will not be described further herein. A bus interface provides an interface. The transceiver 802 may include a plurality of elements, including a transmitter and a receiver, providing a unit for communicating with various other devices over transmission media, including wireless channels, wired channels, optical cables, etc. For different user equipment, the user interface 804 can also be an interface that can connect external and internal required devices. The connected device includes but is not limited to a small keyboard, a display, a speaker, a microphone, a joystick, etc.

The processor 803 is responsible for managing the bus architecture and general processing, and the memory 801 can store data used by the processor 803 when performing operations.

In some embodiments, the processor 803 may be a CPU (Central Processing Unit), an ASIC (Application Specific Integrated Circuit), an FPGA (Field-Programmable Gate Array) or a CPLD (Complex Programmable Logic device). The processor can also adopt a multi-core architecture.

The processor is configured to execute any method provided by the embodiments of the present disclosure according to obtained executable instructions by calling the computer program stored in the memory. The processor and memory can also be physically separated.

In embodiments of the disclosure, the processor 803 is further configured to: generate the first sequence according to a first slot parameter and a target parameter.

In embodiments of the disclosure, the first slot parameter includes at least one of: a number of orthogonal frequency division multiplexing (OFDM) symbols contained in a slot mapped by the first sequence, an identifier of the slot mapped by the first sequence, or identifiers of the OFDM symbols in the slot mapped by the first sequence.

In embodiments of the disclosure, the processor 803 is further configured to: initialize a pseudo-random sequence $c(n)$ according to the first slot parameter and the target parameter, where a method for the initializing is as

follows:

$$c_{init} = (2^{10}(N_{symb}^{slot}n_{s,f}^{\mu} + l + 1)(2n_{ID} + 1) + n_{ID}) \bmod 2^{31};$$

or,

$$c_{init} = (\beta \left\lfloor \frac{n_{ID}}{M} \right\rfloor + 2^{10}(N_{symb}^{slot}n_{s,f}^{\mu} + l + 1)(2(n_{ID} \bmod M) + 1) + (n_{ID} \bmod M)) \bmod 2^{31};$$

in which, $n_{ID}$ is the target parameter, $N_{symb}^{slot}$ is a number of OFDM symbols contained in each slot, $n_{s,f}^{\mu}$ is the identifier of the slot mapped by the first sequence, and $l$ is the identifiers of the OFDM symbols in the slot mapped by the first sequence. In some embodiments, $\beta$ is a real number, and $M$ is a positive integer.

In embodiments of the disclosure, the processor 803 is further configured to:

define the first sequence $r(m)$ based on $$r(m) = \frac{1}{\sqrt{2}}(1 - 2c(2m)) + j\frac{1}{\sqrt{2}}(1 - 2c(2m+1))$$ , in which, $c(2m)$ and $c(2m+1)$ are defined by a pseudo-random sequence $c(n)$. In some embodiments, $m$ is a natural number.

In embodiments of the disclosure, the pseudo-random sequence $c(n)$ is generated based on a sequence $x_1(n)$ and a sequence $x_2(n)$, in which,

$x_1(n+31)=(x_1(n+3)+x_1(n))\bmod 2$, in which the sequence $x_1(n)$ is initialized as $x_1(0)=1$, $x_1(n)=0$, $n=1,2,...,N$, $N$ is a positive integer;

$x_2(n + 31) = (x_2(n + 3) + x_2(n + 2) + x_2(n +1) + x_2(n))\bmod 2$, in which an initialization of the sequence $x_2(n)$ is expressed as: $$c_{init} = \sum_{i=0}^{N} x_2(i) \bullet 2^i$$ ;

the pseudo-random sequence $c(n)$ is defined as: $c(n) = (x_1(n+N_c)+x_2(n+N_c))\bmod 2$, where $N_c$ is a positive integer.

In embodiments of the disclosure, the $n_{ID}$ is determined in at least one of the following ways: determining the $n_{ID}$ according to pre-configuration information or configuration information; determining the $n_{ID}$ according to identification information of the S-PRS; determining the $n_{ID}$ according to identification information of the first terminal and/or identification information of a second terminal; determining the $n_{ID}$ according to area identification information; determining the $n_{ID}$ according to priority information; determining the $n_{ID}$ according to a cyclic redundancy check code (CRC) of sidelink control information (SCI) of the first terminal on a physical sidelink control channel (PSCCH); or determining the $n_{ID}$ according to a high layer signaling.

In embodiments of the disclosure, the area identification information includes an area identifier of a geographical area where the first terminal and/or the second terminal is located; the priority information includes a terminal positioning priority or a data packet priority.

In embodiments of the disclosure, the area identification information is indicated by the SCI on the PSCCH; the priority information is indicated by the SCI on the PSCCH and/or a high layer signaling; in which the PSCCH is an associated channel through which the first terminal transmits the S-PRS.

In embodiments of the disclosure, a frequency resource corresponding to the S-PRS is different from a frequency resource used by a downlink positioning reference signal (DL-PRS) and/or a frequency resource used by an uplink sounding reference signal (UL SRS-Pos), in which the frequency resource includes at least one of a subcarrier, a resource pool, a bandwidth part (BWP), a carrier, or a frequency band.

In embodiments of the disclosure, the processor 803 is further configured to determine the $n_{ID}$ according to the CRC of the SCI of the first terminal on the PSCCH based on the following equation: $$n_{ID} = N_{ID}^{X} \bmod 2^{10}$$ ,

in which, the $n_{ID}$ is the target parameter, the $N_{ID}^{X}$ is a decimal representation value of the CRC, the CRC is generated according to a payload in the SCI carried by the PSCCH, and the SCI on the PSCCH and the S-PRS are transmitted in a same slot.

In embodiments of the disclosure, the processor 803 is further configured to determine the $n_{ID}$ according to the identification information of the first terminal and/or the identification information of the second terminal based on the following equation:

$$n_{ID} = (sourceID + destinationID) \bmod Z_1$$

in which, the $n_{ID}$ is the target parameter, the *sourceID* is the identification information of the first terminal, the *destinationID* is the identification information of the second terminal, and $Z_1$ is a positive integer.

In embodiments of the disclosure, the processor 803 is further configured to determine a target priority of the first terminal from the priority information; in response to the target priority being a first candidate priority, determine the $n_{ID}$ according to: $n_{ID} = (zoneID) \bmod Z_2$, in which the $n_{ID}$ is the target parameter, and the $Z_2$ is a positive integer; and in response to the target priority being a second candidate priority, determining the $n_{ID}$ according to: $n_{ID} = n_{ID0} + (zoneID) \bmod Z_3$, in which the $n_{ID}$ is the target parameter, the $n_{ID0}$ is a positive integer, and the $Z_3$ is a positive integer.

In embodiments of the disclosure, the processor 803 is further configured to determine the $n_{ID}$ from a scrambling identifier (ID) or a sequence generation configuration (sequenceGenerationConfig) in a high-layer signaling parameter.

In embodiments of the disclosure, the first sequence is a GOLD sequence.

It should be noted that the above-mentioned device provided in the embodiments of the present disclosure can implement all the method steps implemented in the above-mentioned method embodiments, and can achieve the same technical effect. The parts and beneficial effects same as the method embodiments in this embodiment will not be described in detail.

FIG. 9 is a block diagram of a terminal positioning device according to an embodiment of the present disclosure. The device is applied to a second terminal.

As shown in FIG. 9, the terminal positioning device 900 includes a memory 901, a transceiver 902, a processor 903 and a user interface 904. The memory 901 is used to store a computer program; the transceiver 902 is used to transmit and receive data under the control of the processor 903; the processor 903 is used to read the computer program in memory 901 and perform the following operations:

> receiving a sidelink positioning reference signal (S-PRS) transmitted by a first terminal, in which the S-PRS includes a first sequence; and
> determining a positioning measurement result according to the S-PRS, and transmitting the positioning measurement result to the first terminal or a positioning server.

In FIG. 9, a bus architecture may include any number of interconnected buses and bridges, specifically including various circuits linked together of one or more processors represented by the processor 903 and one or more memories represented by the memory 901. The bus architecture can also link together various other circuits such as peripherals, voltage regulators, and power management circuits, which are all well known in the art and therefore will not be described further herein. A bus interface provides an interface. The transceiver 902 may include a plurality of elements, including a transmitter and a receiver, providing a unit for communicating with various other devices over transmission media, including wireless channels, wired channels, optical cables, etc. For different user equipment, the user interface 904 can also be an interface that can connect external and internal required devices. The connected device includes but is not limited to a small keyboard, a display, a speaker, a microphone, a joystick, etc.

The processor 903 is responsible for managing the bus architecture and general processing, and the memory 901 can store data used by the processor 903 when performing operations.

In some embodiments, the processor 903 may be a CPU (Central Processing Unit), an ASIC (Application Specific Integrated Circuit), an FPGA (Field-Programmable Gate Array) or a CPLD (Complex Programmable Logic Device). The processor can also adopt a multi-core architecture.

The processor is configured to execute any method provided by the embodiments of the present disclosure according to the obtained executable instructions by calling the computer program stored in the memory. The processor and memory can also be physically separated.

It should be noted that the above-mentioned device provided by the embodiments of the present disclosure can implement all the method steps implemented by the above-mentioned method embodiment, and can achieve the same technical effect. The parts and beneficial effects same as the method embodiments in this embodiment will not be described in detail.

In order to implement the above embodiments, embodiments of the present disclosure provide a processor-readable storage medium. The processor-readable storage medium stores a computer program. The computer program is used to cause a processor to perform a method for transmitting a sidelink positioning reference signal and/or a terminal positioning method. In some embodiments, the processor-readable storage medium is a non-transitory processor-readable storage medium.

In order to implement the above embodiments, embodiments of the present disclosure provide a computer program product, including a computer program that, when executed by a processor, the method for transmitting a sidelink positioning reference signal and/or the terminal positioning method as provided in the foregoing embodiments of the present disclosure is performed.

In order to implement the above embodiments, embodiments of the present disclosure also provide a computer program including computer program codes. When the computer program codes are run on a computer, it causes the computer to execute the method for transmitting a sidelink positioning reference signal and/or the terminal positioning method as provided in the foregoing embodiments of the present disclosure.

It should be noted that the foregoing explanations of the embodiments of the method for transmitting a sidelink positioning reference signal and/or the terminal positioning method are also applicable to the devices, the non-transitory processor-readable storage medium, the computer program product and the computer program, which is described in detail here.

Those skilled in the art will appreciate that embodiments of the present disclosure may be provided as methods, systems, or computer program products. Accordingly, the present disclosure may take the form of an entirely hardware embodiment, an entirely software embodiment, or an embodiment that combines software and hardware aspects. Furthermore, the present disclosure may take the form of a computer program product embodied on one or more computer-usable storage media (including, but not limited to, a magnetic disk storage, an optical storage, and the like) embodying computer-usable program code therein.

The disclosure is described with reference to flowcharts and/or block diagrams of methods, apparatuses (systems), and computer program products according to embodiments of the disclosure. It will be understood that each process and/or block in the flowcharts and/or block diagrams, and combinations of processes and/or blocks in the flowcharts and/or block diagrams, can be implemented by computer-executable instructions. These computer-executable instructions may be provided to a processor of a general-purpose computer, a special-purpose computer, an embedded processor, or other programmable data processing device to produce a machine, such that the instructions executed by the processor of the computer or other programmable data processing device produce a device for implementing the functions specified in a process or processes in the flowcharts and/or in a block or blocks in the block diagram.

These processor-executable instructions may also be stored in a processor-readable memory that is able to guide a computer or other programmable data processing devices to operate in a particular manner, such that the instructions stored in the processor-readable memory generates a manufacture product including an instruction device. The instruction device implements the function specified in one or more processes in the flow chart and/or one or more blocks in the block diagram.

These processor-executable instructions may also be loaded onto a computer or other programmable data processing devices, causing a series of operational steps to be performed on the computer or other programmable devices to produce computer-implemented processing, thereby causing the instructions that are executed on the computer or other programmable device to provide steps for implementing the functions specified in a process or processes of the flowcharts and/or a block or blocks of the block diagrams.

Obviously, those skilled in the art can make various changes and modifications to the present disclosure without departing from the spirit and scope of the disclosure. In this way, if these modifications and variations of the present disclosure fall within the scope of the claims of the present disclosure and equivalent technologies, the present disclosure is also intended to include these modifications and variations.

It should be noted that in the description of the present disclosure, the terms "first", "second", etc. are only used for descriptive purposes and cannot be understood as indicating or implying relative importance. Furthermore, in the description of the present disclosure, "plurality" means two or more unless otherwise specified.

Any process or method descriptions in flowcharts or otherwise described herein may be understood to represent modules, segments, or portions of codes that include one or more executable instructions for implementing the specified logical functions or steps of the process, and the scope of the preferred embodiments of the present disclosure includes additional implementations in which functions may be performed out of the order shown or discussed, including in a substantially simultaneous manner or in the reverse order, depending on the functionality involved, which should be understood by those skilled in the art to which embodiments of the present disclosure belong.

It should be understood that various parts of the present disclosure may be implemented in hardware, software, firmware, or combinations thereof. In the above embodiments, various steps or methods may be implemented in software or firmware stored in a memory and executed by a suitable instruction execution system. For example, if it is implemented in hardware, as in another embodiment, it can be implemented by any one or a combination of the following technologies known in the art: a discrete logic circuit having a logic gate circuit for implementing a logic function on a data signal, an application specific integrated circuits having a suitable combinational logic gate, a programmable gate array (PGA), a field programmable gate array (FPGA), etc.

Those skilled in the art can understand that all or part of the steps involved in implementing the methods of the above embodiments can be completed by instructing relevant hardware through a program. The program can be stored in a computer-readable storage medium. When executed, the program includes one or a combination of the steps of the method embodiments.

In addition, each functional unit in various embodiments of the present disclosure may be integrated into one processing module, or each unit may exist physically alone, or two or more units may be integrated into one module. The above integrated module can be implemented in the form of hardware or software function module. If the integrated module is implemented in the form of a software function module and sold or used as an independent product, it can also be stored in a computer-readable storage medium.

The storage media mentioned above can be a read-only memory, a magnetic disk or an optical disk, etc.

In the description of this specification, reference to the terms "one embodiment," "some embodiments," "an example," "specific examples," or "some examples" or the like means that specific features, structures, materials, or characteristics are described in connection with the embodiments or examples are included in at least one embodiment or example of the present disclosure. In this specification, schematic representations of the above terms do not necessarily refer to the same embodiment or example. Furthermore, the specific features, structures, materials or characteristics described may be combined in any suitable manner in any one or more embodiments or examples.

Although the embodiments of the present disclosure have been shown and described above, it can be understood that the above-mentioned embodiments are illustrative and should not be construed as limitations to the present disclosure. Those skilled in the art can make changes, modifications, substitutions and variations to the above-mentioned embodiments within the scope of the present disclosure.

All embodiments of the present disclosure can be executed alone or in combination with other embodiments, which are considered to be within the scope of protection claimed by the present disclosure.

**Claims**

1. A method for transmitting a sidelink positioning reference signal, performed by a first terminal, comprising:

   generating a first sequence, and obtaining a sidelink positioning reference signal (S-PRS) according to the first sequence; and
   transmitting the S-PRS.

2. The method according to claim 1, wherein generating the first sequence comprises:
   generating the first sequence according to a first slot parameter and a target parameter.

3. The method according to claim 2, wherein the first slot parameter comprises at least one of:

   a number of orthogonal frequency division multiplexing (OFDM) symbols contained in a slot mapped by the first sequence,
   an identifier of the slot mapped by the first sequence, or
   identifiers of the OFDM symbols in the slot mapped by the first sequence.

4. The method according to claim 3, wherein generating the first sequence according to the first slot parameter and the target parameter comprises:

   initializing a pseudo-random sequence $c(n)$ according to the first slot parameter and the target parameter, where a method for the initializing is as follows:

   $$c_{init} = (2^{10}(N_{symb}^{slot}n_{s,f}^{\mu} + l + 1)(2n_{ID} + 1) + n_{ID}) \bmod 2^{31};$$

   or,

   $$c_{init} = (\beta \left\lfloor \frac{n_{ID}}{M} \right\rfloor + 2^{10}(N_{symb}^{slot}n_{s,f}^{\mu} + l + 1)(2(n_{ID} \bmod M) + 1) + (n_{ID} \bmod M)) \bmod 2^{31};$$

   wherein, $n_{ID}$ is the target parameter, $N_{symb}^{slot}$ is a number of OFDM symbols contained in each slot, $n_{s,f}^{\mu}$ is the identifier of the slot mapped by the first sequence, and $l$ is the identifiers of the OFDM symbols in the slot mapped by the first sequence, wherein $\beta$ is a real number, and $M$ is a positive integer.

5. The method according to any one of claims 1 to 4, wherein generating the first sequence comprises:

defining the first sequence $r(m)$ based on

$$r(m) = \frac{1}{\sqrt{2}}(1 - 2c(2m)) + j\frac{1}{\sqrt{2}}(1 - 2c(2m+1)) \; ;$$

wherein, $c(2m)$ and $c(2m+1)$ are defined by a pseudo-random sequence $c(n)$, where $m$ is a natural number.

6. The method according to claim 5, wherein the pseudo-random sequence $c(n)$ is generated based on a sequence $x_1(n)$ and a sequence $x_2(n)$, wherein,

$x_1(n+31)=(x_1(n+3)+x_1(n))\bmod 2$, wherein the sequence $x_1(n)$ is initialized as $x_1(0)=1$, $x_1(n)=0$, $n=1,2,...,N$, $N$ is a positive integer;
$x_2(n+31)=(x_2(n+3)+x_2(n+2)+x_2(n+1)+x_2(n))\bmod 2$, wherein an initialization of the sequence $x_2(n)$ is expressed

as: $$c_{init} = \sum_{i=0}^{N} x_2(i) \bullet 2^i \; ;$$

the pseudo-random sequence $c(n)$ is defined as:

$$c(n) = (x_1(n + N_c) + x_2(n + N_c)) \bmod 2 \,,$$

where $N_c$ is a positive integer.

7. The method according to claim 6, wherein the $n_{ID}$ is determined in at least one of the following ways:

determining the $n_{ID}$ according to pre-configuration information or configuration information;
determining the $n_{ID}$ according to identification information of the S-PRS;
determining the $n_{ID}$ according to identification information of the first terminal and/or identification information of a second terminal;
determining the $n_{ID}$ according to area identification information;
determining the $n_{ID}$ according to priority information;
determining the $n_{ID}$ according to a cyclic redundancy check code (CRC) of sidelink control information (SCI) of the first terminal on a physical sidelink control channel (PSCCH); or
determining the $n_{ID}$ according to a high layer signaling.

8. The method of claim 7, wherein,

the area identification information comprises an area identification of a geographical area where the first terminal and/or the second terminal is located;
the priority information comprises a terminal positioning priority or a data packet priority.

9. The method according to claim 7 or 8, wherein,

the area identification information is indicated by the SCI on the PSCCH;
the priority information is indicated by the SCI on the PSCCH and/or a high layer signaling;
wherein the PSCCH is an associated channel through which the first terminal transmits the S-PRS.

10. The method according to any one of claims 1 to 9, wherein a frequency resource corresponding to the S-PRS is different from a frequency resource used by a downlink positioning reference signal (DL-PRS) and/or a frequency resource used by an uplink sounding reference signal (UL SRS-Pos), wherein the frequency resource comprises at least one of a subcarrier, a resource pool, a bandwidth part (BWP), a carrier, or a frequency band.

11. The method according to claim 7, wherein determining the $n_{ID}$ according to the CRC of the SCI of the first terminal on the PSCCH comprises:

$$n_{ID} = N_{ID}^X \bmod 2^{10}$$

wherein, the $n_{ID}$ is the target parameter, the $N_{ID}^X$ is a decimal representation value of the CRC, the CRC is generated according to a payload in the SCI carried by the PSCCH, and the SCI on the PSCCH and the S-PRS are transmitted in a same slot.

12. The method according to claim 7, wherein determining the $n_{ID}$ according to the identification information of the first terminal and/or the identification information of the second terminal comprises:

$$n_{ID} = (sourceID + destinationID) \bmod Z_1$$

wherein, the $n_{ID}$ is the target parameter, the *sourceID* is the identification information of the first terminal, the *destinationID* is the identification information of the second terminal, and $Z_1$ is a positive integer.

13. The method according to claim 7, wherein determining the $n_{ID}$ according to the priority information comprises:

    determining a target priority of the first terminal from the priority information;
    in response to the target priority being a first candidate priority, determining the $n_{ID}$ according to:

        $n_{ID} = (zoneID) \bmod Z_2$ , wherein the $n_{ID}$ is the target parameter, and the $Z_2$ is a positive integer; and
        in response to the target priority being a second candidate priority, determining the $n_{ID}$ according to:
        $n_{ID} = n_{ID0} + (zoneID) \bmod Z_3$, wherein the $n_{ID}$ is the target parameter, the $n_{ID0}$ is a positive integer, and the $Z_3$ is a positive integer.

14. The method according to claim 7, wherein determining the $n_{ID}$ according to the high layer signaling comprises: determining the $n_{ID}$ from a scrambling identifier (ID) or a sequence generation configuration (sequenceGenerationConfig) in a high-layer signaling parameter.

15. The method according to any one of claims 1-9 and 11-14, wherein the first sequence is a GOLD sequence.

16. A terminal positioning method, performed by a second terminal, comprising:

    receiving a sidelink positioning reference signal (S-PRS) transmitted by a first terminal, wherein the S-PRS comprises a first sequence; and
    determining a positioning measurement result according to the S-PRS, and transmitting the positioning measurement result to the first terminal or a positioning server.

17. An apparatus for transmitting a sidelink positioning reference signal, applied to a first terminal, comprising:

    a generating module, configured to generate a first sequence, and obtain a sidelink positioning reference signal (S-PRS) according to the first sequence; and
    a transmitting module, configured to transmit the S-PRS.

18. The apparatus according to claim 17, wherein the generating module is configured to:
generate the first sequence according to a first slot parameter and a target parameter.

19. The apparatus according to claim 18, wherein the first slot parameter comprises at least one of:

    a number of orthogonal frequency division multiplexing (OFDM) symbols contained in a slot mapped by the first sequence,
    an identifier of the slot mapped by the first sequence, or
    identifiers of the OFDM symbols in the slot mapped by the first sequence.

**20.** The apparatus according to claim 19, wherein the generating module is configured to:

initialize a pseudo-random sequence *c(n)* according to the first slot parameter and the target parameter, where a method for the initializing is as follows:

$$c_{init} = (2^{10}(N_{symb}^{slot} n_{s,f}^{\mu} + l + 1)(2n_{ID} + 1) + n_{ID}) \bmod 2^{31} ;$$

or,

$$c_{init} = (\beta \left\lfloor \frac{n_{ID}}{M} \right\rfloor + 2^{10}(N_{symb}^{slot} n_{s,f}^{\mu} + l + 1)(2(n_{ID} \bmod M) + 1) + (n_{ID} \bmod M)) \bmod 2^{31} ;$$

wherein, $n_{ID}$ is the target parameter, $N_{symb}^{slot}$ is a number of OFDM symbols contained in each slot, $n_{s,f}^{\mu}$ is the identifier of the slot mapped by the first sequence, and *l* is the identifiers of the OFDM symbols in the slot mapped by the first sequence, wherein $\beta$ is a real number, and *M* is a positive integer.

**21.** The apparatus according to claim 20, wherein the $n_{ID}$ is determined in at least one of the following ways:

determining the $n_{ID}$ according to pre-configuration information or configuration information;
determining the $n_{ID}$ according to identification information of the S-PRS;
determining the $n_{ID}$ according to identification information of the first terminal and/or identification information of a second terminal;
determining the $n_{ID}$ according to area identification information;
determining the $n_{ID}$ according to priority information;
determining the $n_{ID}$ according to a cyclic redundancy check code (CRC) of sidelink control information (SCI) of the first terminal on a physical sidelink control channel (PSCCH); or
determining the $n_{ID}$ according to a high layer signaling.

**22.** The apparatus of claim 21, wherein:

the area identification information comprises an area identifier of a geographical area where the first terminal and/or the second terminal is located;
the priority information comprises a terminal positioning priority or a data packet priority.

**23.** The apparatus according to claim 21 or 22, wherein,

the area identification information is indicated by the SCI on the PSCCH;
the priority information is indicated by the SCI on the PSCCH and/or a high layer signaling;
wherein the PSCCH is an associated channel through which the first terminal transmits the S-PRS.

**24.** The apparatus according to any one of claims 17-23, wherein a frequency resource corresponding to the S-PRS is different from a frequency resource used by a downlink positioning reference signal (DL-PRS) and/or a frequency resource used by an uplink sounding reference signal (UL SRS-Pos), wherein the frequency resource comprises at least one of a subcarrier, a resource pool, a bandwidth part (BWP), a carrier, or a frequency band.

**25.** A terminal positioning apparatus, applied to a second terminal, comprising:

a receiving module, configured to receive a sidelink positioning reference signal (S-PRS) transmitted by a first terminal, wherein the S-PRS comprises a first sequence; and
a determining module, configured to determine a positioning measurement result according to the S-PRS, and transmit the positioning measurement result to the first terminal or a positioning server.

**26.** A device for transmitting a sidelink positioning reference signal, applied to a first terminal, and comprising a memory, a transceiver, and a processor; wherein the memory is configured to store a computer program; the transceiver is configured to transmit and receive data under a control of the processor; the processor is configured to read the computer program in the memory and perform following operations:

> generating a first sequence, and obtaining a sidelink positioning reference signal (S-PRS) according to the first sequence; and
> transmitting the S-PRS.

**27.** The device according to claim 26, wherein the processor is configured to:
generate the first sequence according to a first slot parameter and a target parameter.

**28.** The device according to claim 27, wherein the first slot parameter comprises at least one of:

> a number of orthogonal frequency division multiplexing (OFDM) symbols contained in a slot mapped by the first sequence,
> an identifier of the slot mapped by the first sequence, or
> identifiers of the OFDM symbols in the slot mapped by the first sequence.

**29.** The method according to claim 28, wherein the processor is configured to:

> initialize a pseudo-random sequence *c(n)* according to the first slot parameter and the target parameter, where a method for the initializing is as follows:

$$c_{init} = (2^{10}(N_{symb}^{slot}n_{s,f}^{\mu} + l + 1)(2n_{ID} + 1) + n_{ID}) \bmod 2^{31};$$

or,

$$c_{init} = (\beta \left\lfloor \frac{n_{ID}}{M} \right\rfloor + 2^{10}(N_{symb}^{slot}n_{s,f}^{\mu} + l + 1)(2(n_{ID} \bmod M) + 1) + (n_{ID} \bmod M)) \bmod 2^{31};$$

wherein, $n_{ID}$ is the target parameter, $N_{symb}^{slot}$ is a number of OFDM symbols contained in each slot, $n_{s,f}^{\mu}$ is the identifier of the slot mapped by the first sequence, and *l* is the identifiers of the OFDM symbols in the slot mapped by the first sequence, wherein $\beta$ is a real number, and M is a positive integer.

**30.** The device according to claim 29, wherein the $n_{ID}$ is determined in at least one of the following ways:

> determining the $n_{ID}$ according to pre-configuration information or configuration information;
> determining the $n_{ID}$ according to identification information of the S-PRS;
> determining the $n_{ID}$ according to identification information of the first terminal and/or identification information of a second terminal;
> determining the $n_{ID}$ according to area identification information;
> determining the $n_{ID}$ according to priority information;
> determining the $n_{ID}$ according to a cyclic redundancy check code (CRC) of sidelink control information (SCI) of the first terminal on a physical sidelink control channel (PSCCH); or
> determining the $n_{ID}$ according to a high layer signaling.

**31.** The device of claim 30, wherein:

> the area identification information comprises an area identifier of a geographical area where the first terminal and/or the second terminal is located;
> the priority information comprises a terminal positioning priority or a data packet priority.

**32.** The device according to claim 30 or 31, wherein,

> the area identification information is indicated by the SCI on the PSCCH;

the priority information is indicated by the SCI on the PSCCH and/or a high layer signaling;
wherein the PSCCH is an associated channel through which the first terminal transmits the S-PRS.

33. The device according to any one of claims 26-32, wherein a frequency resource corresponding to the S-PRS is different from a frequency resource used by a downlink positioning reference signal (DL-PRS) and/or a frequency resource used by an uplink sounding reference signal (UL SRS-Pos), wherein the frequency resource comprises at least one of a subcarrier, a resource pool, a bandwidth part (BWP), a carrier, or a frequency band.

34. A terminal positioning device, applied to a second terminal, comprising a memory, a transceiver, and a processor; wherein the memory is configured to store a computer program; the transceiver is configured to transmit and receive data under a control of the processor; the processor is configured to read the computer program in the memory and perform following operations:

receiving a sidelink positioning reference signal (S-PRS) transmitted by a first terminal, wherein the S-PRS comprises a first sequence; and
determining a positioning measurement result according to the S-PRS, and transmitting the positioning measurement result to the first terminal or a positioning server.

35. A processor-readable storage medium having a computer program stored thereon, wherein the computer program is configured to cause a processor to perform the method for transmitting a sidelink positioning reference signal according to any one of claims 1 to 15.

36. A processor-readable storage medium having a computer program stored thereon, wherein the computer program is configured to cause a processor to perform the terminal positioning method according to claim 16.

37. A computer program product, comprising a computer program, wherein when the computer program is executed by a processor, the method for transmitting a sidelink positioning reference signal according to any one of claims 1 to 15 is performed.

38. A computer program product, comprising a computer program, wherein when the computer program is executed by a processor, the terminal positioning method according to claim 16 is performed.

39. A computer program, comprising computer program codes, wherein when the computer program codes are run on a computer, the computer is caused to perform the sidelink positioning reference signal according to any one of claims 1 to 15.

40. A computer program, comprising computer program codes, wherein when the computer program codes are run on a computer, the computer is caused to perform the terminal positioning method according to claim 16.

generating a first sequence, and obtaining a sidelink positioning reference signal (S-PRS) according to the first sequence — S101

transmitting the S-PRS — S102

FIG. 1

FIG. 2

generating the first sequence according to a first slot parameter and a target parameter — S301

FIG. 3

first terminal
A1

S-PRS1

positioning
measurement
data (TOA1)

S-PRS2

first terminal
A2

second
terminal B

positioning
measurement
data (TOA2)

S-PRS3

positioning
measurement
data (TOA3)

first terminal
A3

FIG. 4

receiving a sidelink positioning reference
signal (S-PRS) transmitted by a first terminal,
the S-PRS comprises a first sequence

S501

determining a positioning measurement result
according to the S-PRS, and transmitting the
positioning measurement result to the first
terminal or a positioning server

S502

FIG. 5

600

apparatus for transmitting a sidelink
positioning reference signal

601

generating module

602

transmitting module

FIG. 6

700

terminal positioning apparatus

701

receiving module

702

determining module

FIG. 7

800

803

processor

801

memory

bus interface

802

transceiver

804

user
interface

FIG. 8

900

903

processor

901

memory

bus interface

902

transceiver

904

user
interface

FIG. 9

# INTERNATIONAL SEARCH REPORT

| International application No. |
|---|
| **PCT/CN2023/090138** |

### A. CLASSIFICATION OF SUBJECT MATTER

H04L27/26(2006.01)i

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP: 直通, 链路, 侧链路, 旁链路, 定位参考信号, 序列, 时隙, 参数, 伪随机, 预配置, 高层, 标识, 初始化, sidelink, S-PRS, slot, gold, sequence, positioning, reference signal, SCI, CRC, initial

### C. DOCUMENTS CONSIDERED TO BE RELEVANT

| Category* | Citation of document, with indication, where appropriate, of the relevant passages | Relevant to claim No. |
|---|---|---|
| PX | CN 115643636 A (VIVO COMMUNICATION TECHNOLOGY CO., LTD.) 24 January 2023 (2023-01-24)<br>description, paragraphs [0034]-[0074] and [0220]-[0297] | 1-40 |
| X | CN 114339987 A (SPREADTRUM COMMUNICATIONS (SHANGHAI) CO., LTD.) 12 April 2022 (2022-04-12)<br>description, paragraphs [0028]-[0073] | 1-40 |
| X | CN 111213393 A (APPLE INC.) 29 May 2020 (2020-05-29)<br>description, paragraphs [0112]-[0121] | 1-40 |
| A | WO 2021141306 A1 (HYUNDAI MOTOR CO., LTD. et al.) 15 July 2021 (2021-07-15)<br>entire document | 1-40 |
| A | US 2019230618 A1 (NOKIA TECHNOLOGIES OY) 25 July 2019 (2019-07-25)<br>entire document | 1-40 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 July 2023** | **26 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/090138**

| Patent document cited in search report | | | Publication date (day/month/year) | Patent family member(s) | | | Publication date (day/month/year) |
|---|---|---|---|---|---|---|---|
| CN | 115643636 | A | 24 January 2023 | WO | 2023001096 | A1 | 26 January 2023 |
| CN | 114339987 | A | 12 April 2022 | WO | 2022068836 | A1 | 07 April 2022 |
| CN | 111213393 | A | 29 May 2020 | WO | 2019036578 | A1 | 21 February 2019 |
| | | | | US | 2022039080 | A1 | 03 February 2022 |
| | | | | US | 11317415 | B2 | 26 April 2022 |
| | | | | EP | 3669557 | A1 | 24 June 2020 |
| | | | | CN | 111213393 | B | 11 January 2022 |
| WO | 2021141306 | A1 | 15 July 2021 | KR | 20210089576 | A | 16 July 2021 |
| | | | | US | 2023064036 | A1 | 02 March 2023 |
| | | | | EP | 4068671 | A1 | 05 October 2022 |
| | | | | CN | 114902597 | A | 12 August 2022 |
| US | 2019230618 | A1 | 25 July 2019 | WO | 2019145095 | A1 | 01 August 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022104762085